# EUROPEAN PATENT SPECIFICATION

(11) **EP 3 812 072 B1**
(45) Date of publication and mention of the grant of the patent: **19.07.2023**
(21) Application number: 18914612.9
(22) Date of filing: 13.04.2018
(51) Int. Cl.: B23D 43/04

(54) **BROACH FOR BROACHING MACHINE**
RÄUMWERKZEUG FÜR EINE RÄUMMASCHINE
BROCHE POUR MACHINE DE BROCHAGE

(43) Date of publication of application: 28.04.2021
(73) Proprietor: EKIN, S.Coop., 48340 Amorebieta (Bizkaia) (ES)
(72) Inventor: CELAYA GOROSTIZA, Guillermo, 48340 AMOREBIETA (BIZKAIA) (ES)
(74) Representative: Plasseraud IP
(86) International application number: PCT/ES2018/070302
(87) International publication number: WO 2019/197688

(56) References cited:
- WO-A1-02/06000
- CN-A- 102 284 743
- CN-U- 2 056 620
- DE-U1- 20 310 134
- JP-A- S57 127 618
- JP-A- 2002 283 132
- US-A- 2 697 271
- US-A- 4 740 115
- US-A1- 2002 012 573

## Description

### Technical field

The present invention relates to tools used in broaching machines, particularly a broach of the type referred to as a surface broach, which can be used to perform rough machining and finishing works. Such a broach, according to the preamble of claim 1, is known from document JP S57 127618 A.

### State of the art

In broaching machines, the tool, hereinafter identified as a broach, is the fundamental piece, to the extent that there are some who regard the machine as simply a device for providing rectilinear movement to the broach which performs, by itself, a complete machining operation.

Broaches can be cylindrical bars provided with multiple rows of teeth, generally dedicated to machining the interior of pieces; or they can be those referred to as surface broaches, formed by an elongated parallelepipedic body having the corresponding correlation of teeth on one of its faces. Surface broaches of this type are used, for example, for machining the discs of airplane turbine engines.

In the already known techniques, surface broaches are made of high-speed steel. To improve working speeds, making the rows of teeth of hard-metal for rough machining work is also known, while high-speed steel continues to be used for finishing works.

Among the already solutions known for manufacturing broaches of this type from hard-metal, there is the solution of securing the portion of teeth made of hard-metal, referred to as sheet, to metallic steel sheet-holder by means of gluing. That is, the teeth of the broach are defined by a hard-metal sheet, generally formed by segments arranged in longitudinal correlation and secured on the sheet-holder, by means of gluing, to withstand the strains and stresses generated during the broaching process.

This solution has a primary drawback, which is that it does not allow the hard-metal teeth of the sheet to be coated by physical vapor phase deposition coating techniques known as PVD (Physical Vapor Deposition) or by coating according to the CVD (Chemical Vapor Deposition) method.

The application of these coatings increases the service life of tools, which today, and with the gluing solution, cannot be applied. In fact, in the case of hard-metal broaches in which the segments forming the toothed sheet are glued, the broach cannot be introduced in a furnace for the coating process because the heat generated within the oven deteriorates the adhesive and furthermore produces an environment which interrupts the actual coating process.

In broaches having hard-metal toothed sheets glued thereto, this means that the teeth cannot be coated by means of PVD or CVD techniques, such that the service life of these broaches is shorter, and when the teeth of the sheets deteriorate due to use, the entire broach must be discarded.

An example of prior art can be found in CN 2056620 U.

### Object of the Invention

According to the solution according to independent claim 1, herein proposed, in these hard-metal broaches the segment or segments forming a toothed sheet are not secured to the sheet-holder by means of gluing, but rather are secured by means of a mechanical solution, the essential aspects of which are:
- The segments of the hard-metal toothed sheet are assembled on the sheet-holder by means of a dovetail coupling or the like.
- Once the segments defining the toothed sheet have been assembled in the sheet-holder, they are mechanically secured in position.

To that end and as a preferred solution, there is arranged below the toothed sheet, paraxial to same, a softer strip of metal or dolly, on which tightening screws impinge, acting in the perpendicular direction with respect to said dolly.

The dolly distributes the pressures of the tightening screws along its entire length.

Once these screws are tightened with a preset tightening torque, they are secured in position by means of anchor pins acting in the perpendicular direction with respect to the tightening screws, thus preventing their loosening from occurring due to the strains and stresses the broach receives while working.

With this solution, it is feasible to subject the hard-metal toothed sheet to a coating process by means of PVD or CVD techniques, as there are no adhesives, and it is even feasible to release the sheets and subject only said sheets to the corresponding process.

It is also possible to replace one or more segments of a toothed sheet should this be required.

At one of the ends of the sheet-holder, namely at the end where stresses of the broach are produced during the working phase, there may be a mechanical stop for the hard-metal sheets.

### Description of the figures

Figure 1 shows section A-A indicated in Figure 2.
Figure 2 is a profile view of the sheet-holding support 1 of a conventional broach.
Figure 3 shows an elevation view of a conventional toothed sheet 2.
Figure 4 corresponds to the elevation view of the sheet-holding support 1 and the toothed sheet 2 already assembled therein.
Figure 5 is a profile view of Figure 4.
Figure 6 is a perspective view of a sheet-holding support 3 made according to this invention.
Figure 7 corresponds to a profile view of Figure 6.
Figure 8 shows the elevational view of the sheet-holding support 3.
Figure 9 is cross-section I-I indicated in Figure 8.
Figure 10 is cross-section II-II indicated in Figure 8.
Figure 11 is an elevation view of a toothed sheet 4 made according to the invention.
Figure 12 is the profile view of the preceding figure.
Figure 13 shows a cross-section of the broach given at the height of one of the screws 6.
Figure 14 is also a cross-section of the broach but given here at the height of the stop 8.

### Detailed description of the invention

The object of the present invention is a broach as a tool of a broaching machine, and more specifically a broach in which the rows of teeth are made of hard-metal, for rough machining works.

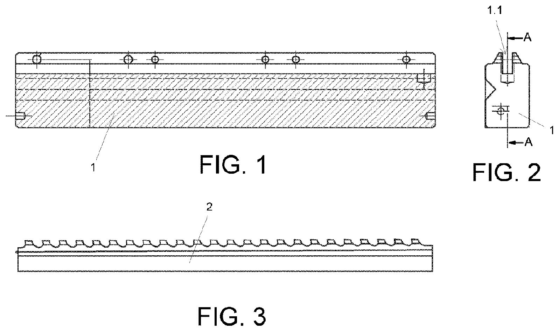

Figures 1 to 5 show a conventional, already known embodiment of broaches of this type, identified as glue-secured broaches.

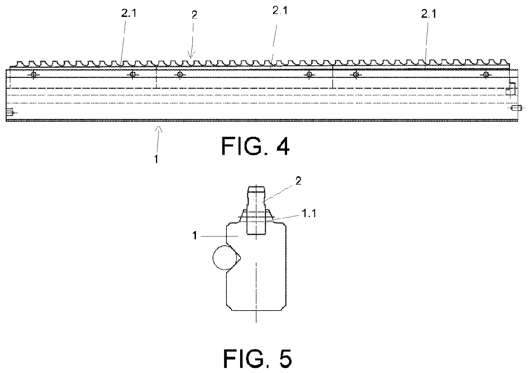

In this case, the conventional broach is made up of a support body or sheet-holder (1) and a toothed sheet (2) having the corresponding hard-metal teeth of the broach. The toothed sheet (2) may be formed by one or more segments (2.1) arranged one after the other, in longitudinal correlation, where it is seen in Figure 4 that it is formed by three segments (2.1).

According to this known solution, the sheet-holder (1) defines a recess (1.1) for fitting therein the segments (2.1) forming the toothed sheet (2), and securing is carried out by means of gluing, which prevents coating the hard-metal teeth of the sheet by means of PVD or CVD coating techniques, thereby reducing the service life of the broach.

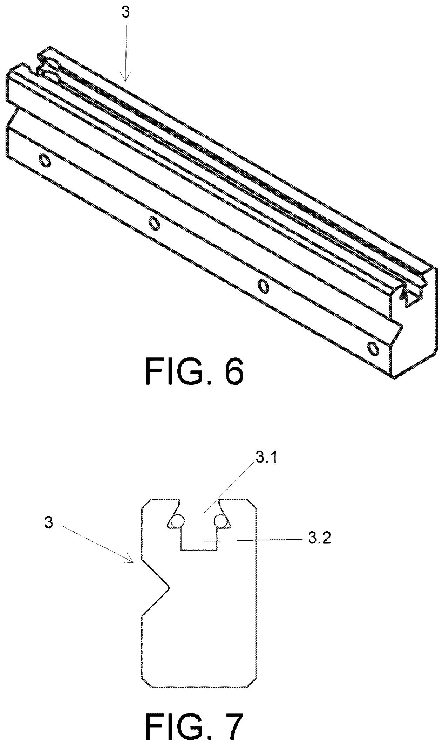

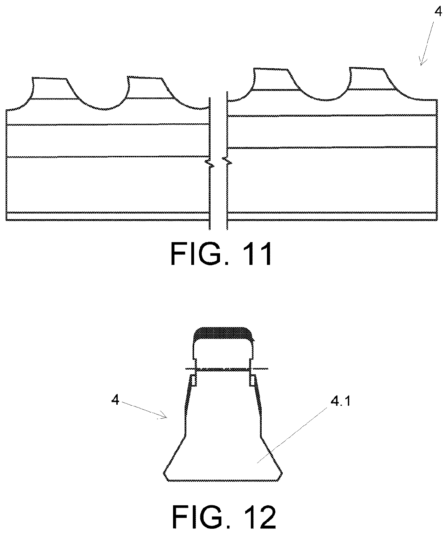

According to the invention, the broach continues to be formed by a sheet-holder (3), see Figure 6, and by the toothed sheet (4) depicted in Figures 11 and 12, and is formed by one or more segments arranged in longitudinal correlation defining the hard-metal teeth.

According to the invention, the sheet-holder (3) here defines a preferably dovetail recess (3.1) in matching correspondence with the configuration of the base (4.1) of the toothed sheet (4), such that the segment or segments defining the toothed sheet (4) are assembled in the sheet-holder (3) by a mechanical coupling, preferably a mechanical dovetail coupling.

Preferably the dovetail coupling has been selected as it provides optimal conditions, but other alternative and known coupling shapes, such as a T-shaped, double, or half dovetail assembly, etc., could be contemplated without altering the essence of the invention.

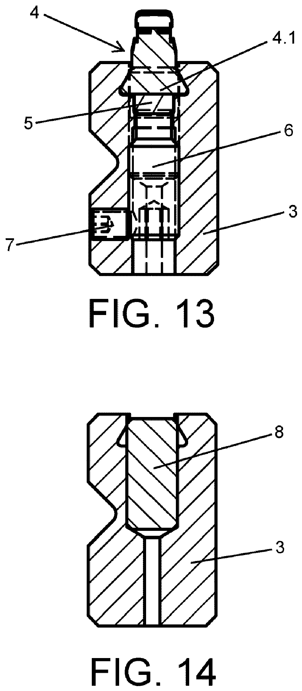

Below the dovetail recess (3.1) there is another recess (3.2), see Figure 7. This other recess (3.2) is intended for housing a strip (5) acting as a dolly, see Figure 13.

The sheet-holder (3) also defines threaded holes (3.3) for securing screws (6), see Figure 13. According to this embodiment and once the segments forming the toothed sheet (4) are assembled in the sheet-holder (3) by means of the mechanical dovetail coupling, they are secured in position by means of the tightening exerted by the screws (6). These screws (6) impinge against the lower portion of the dolly (5) in a direction perpendicular to same, such that this dolly (5) uniformly distributes the tightening pressures of the screws (6), on the segments of the toothed sheet (4).

Once the screws (6) are tightened with a preset tightening torque, they are secured in position by means of anchor pins (7) which, as seen in Figure 13, act in the perpendicular direction with respect to the screws (6) by means of being screwed into recesses (3.4) of the sheet-holder (3).

These tightening screws (6) can obviously vary in number and arrangement, without altering the essence of the invention, and can even be replaced with other known tightening means which allow the toothed sheet (4) to be secured in position in the sheet-holder (3).

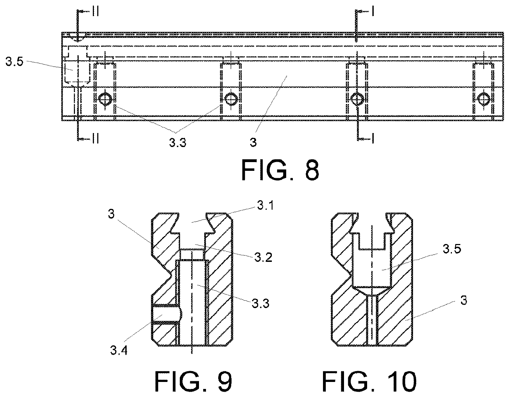

As seen in the cross-sectional view of Figure 10, at one of the ends of the sheet-holder (3), namely at the end where strains of the broach are produced during the working phase, there is a cavity (3.5) in which a stop (8) is included, see Figure 14, and carries out the functions of a mechanical stop for the toothed sheet (4) in the direction in which stresses of the broach are produced during the working phase.

The fact that this stop (8) is formed by another conventional solution and is not even an attached element, and it is the actual sheet-holder (3) that forms it, would not alter the essence of the invention in any way. It has further been provided for that it may not even be required in some cases.

## Claims

1. A broach for a broaching machine, which comprises a toothed sheet (4) formed by one or more segments arranged in longitudinal correlation and a sheet-holding support (3) in which the toothed sheet (4) is placed;
wherein the sheet-holding support (3) has a recess (3.1) into which a base (4.1) of the toothed sheet (4) with matching configuration fits, in order to establish mechanical coupling between the two, and in that the sheet-holding support (3) includes tightening means (6) for securing the toothed sheet (4) in position in the sheet-holder (3);
**characterized in that** the toothed sheet (4) comprises hard-metal teeth.

2. The broach for a broaching machine according to claim 1, wherein the tightening means (6) are screws screwed into recesses (3.3) of the sheet-holder (3) and acting in the perpendicular direction with respect to the theoretical longitudinal axis of the toothed sheet (4).

3. The broach for a broaching machine according to claim 2, wherein a dolly (5) uniformly distributing the tightening forces of the screws (6) is arranged between the base (4.1) of the toothed sheet (4) and the tightening means (6).

4. The broach for a broaching machine according to any one of the preceding claims, wherein the recess (3.1) in which the base (4.1) of the toothed sheet (4) fits has a dovetail shape.

## Patentansprüche

1. Räumwerkzeug für eine Räummaschine, welches ein gezahntes Blatt (4), das durch ein oder mehrere Segmente gebildet ist, welche in einer longitudinalen Korrelation angeordnet sind, und einen Halteträger (3) umfasst, in welchem das gezahnte Blatt (4) platziert ist;
wobei der Blatthalteträger (3) eine Aussparung (3.1) aufweist, in welche eine Basis (4.1) des gezahnten Blatts (4) mit einer passenden Konfiguration passt, um eine mechanische Kopplung zwischen den beiden herzustellen, und wobei der Blatthalteträger (3) Befestigungsmittel (6) zum Sichern des gezahnten Blatts (4) in Position in dem Blatthalter (3) umfasst;
**dadurch gekennzeichnet, dass** das gezahnte Blatt (4) Hartmetallzähne umfasst.

2. Räumwerkzeug für eine Räummaschine nach Anspruch 1, wobei die Befestigungsmittel (6) Schrauben sind, welche in Aussparungen (3.3) des Blatthalters (3) geschraubt sind und in der senkrechten Richtung in Bezug auf die theoretische longitudinale Achse des gezahnten Blatts (4) wirkt.

3. Räumwerkzeug für eine Räummaschine nach Anspruch 2, wobei ein Dolly (5), welcher die Befestigungskräfte der Schrauben (6) gleichmäßig verteilt, zwischen der Basis (4.1) des gezahnten Blatts (4) und den Befestigungsmitteln (6) angeordnet ist.

4. Räumwerkzeug für eine Räummaschine nach einem der vorhergehenden Ansprüche, wobei die Aussparung (3.1), in welche die Basis (4.1) des gezahnten Blatts (4) passt, eine Schwalbenschwanzform aufweist.

## Revendications

1. Broche pour une machine de brochage, qui comprend une feuille dentée (4) formée par un ou plusieurs segments agencés en corrélation longitudinale etun support porte-feuille (3) dans lequel est placée la feuille dentée (4) ;
dans laquelle le support porte-feuille (3) présente un évidement (3.1) dans lequel s'insère une base (4.1) de la feuille dentée (4) à configuration homologue, afin d'établir un couplage mécanique entre les deux, et en ce que le supportporte-feuille (3) comporte un moyen de serrage (6) pour immobiliser la feuille dentée (4) en position dans le porte-feuille (3) ;
**caractérisée en ce que** la feuille dentée (4) comprend des dents en métal dur.

2. Broche pour une machine de brochage selon la revendication 1, dans laquelle le moyen de serrage (6) se présente sous la forme de vis vissées dans des évidements (3.3) du porte-feuille (3) et agissant dans la direction perpendiculaire par rapport à l'axe longitudinal théorique de la feuille dentée (4).

3. Broche pour une machine de brochage selon la revendication 2, dans laquelle un poussoir (5) distribuant uniformément les forces de serrage des vis (6) est agencé entre la base (4.1) de la feuille dentée (4) et le moyen de serrage (6).

4. Broche pour une machine de brochage selon l'une quelconque des revendications précédentes, dans laquelle l'évidement (3.1) dans lequel s'insère la base (4.1) de la feuille dentée (4) présente une forme en queue-d'aronde.
